# EUROPÄISCHE PATENTSCHRIFT

(11) **EP 0 386 415 B1**
(45) Veröffentlichungstag und Bekanntmachung des Hinweises auf die Patenterteilung: **08.12.1993**
(21) Anmeldenummer: 90100778.1
(22) Anmeldetag: 16.01.1990
(51) Int. Cl.: G03B 27/16, G03G 15/28, G02F 1/135

(54) **Vorrichtung zur Bildverarbeitung**
Image processing device
Dispositif de traitement d'images

(30) Priorität: 08.03.1989 DE 8902851 U
(43) Veröffentlichungstag der Anmeldung: 12.09.1990
(73) Patentinhaber: Kempf, Georg-Ulrich, D-21465 Wentorf (DE)
(72) Erfinder: Kempf, Georg-Ulrich, D-21465 Wentorf (DE)
(74) Vertreter: Patentanwälte Hauck, Graalfs, Wehnert, Döring, Siemons

(56) Entgegenhaltungen:
- EP-A- 229 898
- EP-A- 235 771
- DE-A- 3 019 100
- DE-A- 3 539 953
- GB-A- 1 604 375
- US-A- 4 080 058

## Beschreibung

Die Erfindung bezieht sich auf eine Vorrichtung für die Bildverarbeitung von transparenten Vorlagen.

Die Verarbeitung von transparenten Vorlagen ist nicht unproblematisch, wie im folgenden am Beispiel von herkömmlichen, elektrostatischen Kopierern erörtert wird. Kopierer dieser Art enthalten im Inneren des Gerätes eine Lichtquelle. Die Lichtquelle bestrahlt während des Kopiervorganges eine auf der Vorlagenscheibe im Gerätegehäuse angeordnete Vorlage. Das von der Vorlage ins Innere des Gerätes reflektierte Licht wird dort von einer lichtelektrischen Empfangsvorrichtung empfangen. In Abhängigkeit von der Intensität bzw. bei Farbkopierern zusätzlich von der Zusammensetzung der reflektierten Lichtsignale wird dann auf elektrostatischem Wege eine Kopie gebildet. Voraussetzung dafür ist aber, daß die Vorlage in ausreichendem Maße Licht reflektiert. Eine transparente d.h. kaum reflektierende Vorlage läßt sich dagegen nur kopieren, wenn von der Kopiererlichtquelle aus gesehen dahinter eine reflektierende Fläche angeordnet ist. Es ist in diesem Zusammenhang z.B. bekannt, herkömmliche Farbkopierer mit einem Spiegelaufsatz zu versehen, der Spiegelstreifen enthält, die parallel zu den farbigen Kopierleuchtstofflampen angeordnet sind. Weiterhin ist es auch möglich, einfach ein Stück weißes Papier auf die Vorlage zu legen. In beiden Fällen strahlt die Lichtquelle des Kopierers durch die transparente Vorlage auf die reflektierende Fläche bzw. den Spiegel. Die dunkleren Bereiche der Vorlage, z.B. Striche, werden dabei entsprechend schwächer bzw. als Schatten auf der Spiegelfläche abgebildet und auch dementsprechend schwächer zurück auf die Empfangsvorrichtung reflektiert. Ein entscheidender Nachteil ist jedoch darin zu sehen, daß das Licht zweimal die transparente Vorlage passieren muß, worunter die Auflösung und Helligkeit der gebildeten Kopie leiden. Es lassen sich daher in dieser Art nur hochtransparente Vorlagen mit scharfen Kontrasten, z.B. Overhead-Folien, problemlos kopieren.

Eine weitere Möglichkeit zur Vervielfältigung von transparenten Vorlagen wird durch eine Einheit aus einem elektrostatischen Kopierer und einem Diaprojektor geschaffen. Über einen Spiegel projiziert der Projektor die Vorlage durch das Eintrittsfenster eines Kopierers auf dessen Empfangsvorrichtung, die dann eine entsprechende Kopie bildet. Ein Nachteil besteht darin, daß nur Dias kopiert werden können.

Die oben beschriebenen Probleme treten aber nicht nur in Verbindung mit elektrostatischen Kopierern auf. Sie bestehen generell, wenn eine transparente Vorlage im Zuge der Bildverarbeitung in elektronische oder elektrostatische Signale umgesetzt werden soll.

Nach der EP-A-0 235 771 ist eine Vorrichtung zur Bildverarbeitung transparenter Vorlagen bekanntgeworden. Ein Gehäuse ist in einen Hellraum und einen Dunkelraum unterteilt. Im Hellraum befindet sich ein Leuchtkasten, der eine Vorlage, zum Beispiel ein Diapositiv, durchstrahlt. Das Licht gelangt über eine Optik in einen Dunkelraum, in dem sich eine Vorrichtung zum Aufladen, Belichten und Entwickeln von lichtempfindlichem Aufzeichnungsmaterial befindet. Während des Abbildungsvorgangs einer Vorlage auf das Aufzeichnungsmaterial werden eine Auflagevorrichtung und eine Entwicklungseinrichtung mit einstellbarer Geschwindigkeit über das Aufzeichnungsmaterial hinweggeführt, wobei die Belichtung durch einen Schlitz hindurch erfolgt.

Aus der GB-A-1 604 375 ist bekannt, von einem Flüssigkeitskristallspeicher ein Bild mit Hilfe lichtempfindlicher Dioden und einer entsprechenden Optik abzutasten, um das Bild in digitale Signale zu verwandeln.

Aus der DE-A-30 19 100 ist bekannt, Streuscheiben bzw. Mattfolien aus organischen Polymergemischen unter Zusatz von Streumitteln aus Polyesterdispersionen herzustellen.

Aufgabe der Erfindung ist es, eine Vorrichtung zur Bildverarbeitung zu schaffen, mit der sich unterschiedliche und unterschiedlich große Durchlichtvorlagen bequem und mit guten Ergebnissen verarbeiten lassen.

Gelöst wird diese Aufgabe durch eine Vorrichtung mit den Merkmalen des Patentanspruchs 1.

Die erfindungsgemäße Vorrichtung weist danach einen Leuchtkasten (Lichtbox) auf, die einer lichtelektrischen Empfangsvorrichtung zugeordnet ist. Die lichtelektrische Empfangsvorrichtung besitzt eine Empfangsebene, die eine Mehrzahl von lichtempfindlichen Elementen, beispielsweise Dioden, aufweist. In der Regel ist sie in einem Gehäuse angeordnet, das eine der Empfangsebene zugeordnete Vorlagenscheibe aufweist. In dem Gehäuse können zusätzlich auch noch weitere der Bildverarbeitung dienende Vorrichtungen angeordnet sein. Der Leuchtkasten ist so ausgerichtet, daß das von ihm ausgehende Licht die Empfangsebene der Epfangsvorrichtung beleuchtet.

Im Zuge der Bildverarbeitung mit der erfindungsgemäßen Vorrichtung wird eine transparente Vorlage zwischen dem Leuchtkasten und der Empfangsvorrichtung so angeordnet, daß sie parallel zu der Empfangsebene ausgerichtet ist. Dann wird der Leuchtkasten eingeschaltet, wobei er die Vorlage auf die Empfangsebene projiziert. Je nach Vorlagewerten werden die lichtempfindlichen Elemente, z.B. Dioden, unterschiedlich stark angesprochen und bilden entsprechende elektrische Signale. Die elektrischen Signale können nun je nach Anwendungszweck verarbeitet werden. So kann ein Scanner die Empfangsebene Punkt für Punkt seriell abtasten. Die abgetasteten Signale können dann z.B. gespeichert, auf einem Monitor dargestellt oder direkt auf z.B. elektrostatischem Wege zur Bildung einer Kopie verwendet werden. Andererseits ist es aber auch möglich, die in der Empfangsebene erzeugten elektrischen Signale nicht seriell, d.h. flächen- oder linienweise zu verarbeiten.

Die Lichtaustrittsöffnung des Leuchtkastens weist eine transluzente Scheibe aus einem Kunststoffmaterial aus den Gruppen der Fluorelastomere oder Fluorkohlenstoffharze, insbesondere aus Teflon (Warenzeichen), auf. Eine derartige Streuscheibe aus PTFE ist extrem hitzebeständig. Bei Verwendung einer derartigen Streuscheibe ist es daher möglich, Warmlichtquellen anstelle der üblicherweise verwendeten Kaltlichtquellen einzusetzen. Dadurch läßt sich die Lichtintensität deutlich steigern. Besonders vorteilhaft ist es, wenn die Wände des Leuchtkastens von innen verspiegelt sind und davor ebenfalls z.B. Teflonstreuscheiben angeordnet werden. Auf diese Art wird eine größtmöglich Lichtausbeute erzielt, wobei gleichzeitig aufgrund der wärmedämmenden Eigenschaften von Teflon eine zu starke Hitzeabstrahlung nach außen vermieden wird.

Befindet sich die lichtelektrische Empfangsvorrichtung z.B. in einem elektrostatischen Kopierer unterhalb von dessen Vorlagenscheibe, so ist diese parallel zur Lichtaustrittsöffnung des Leuchtkastens ausgerichtet. In dieser Ausgestaltung handelt es sich also um eine Vorrichtung, die aus einem herkömmlichen elektrostatischen Kopierer und einem damit verbundenen Leuchtkasten besteht. Der Leuchtkasten ist dabei so angeordnet, daß sein Licht durch die Vorlagenscheibe die darunterliegende Empfangsebene der lichtelektrischen Empfangsvorrichtung direkt bestrahlt.

Während des Kopiervorganges wird die transparente Vorlage auf der Vorlagenscheibe angeordnet, und von dem Leuchtkasten auf die im Inneren des Gerätes befindliche Empfangsebene projiziert. Die kopierereigene Lichtquelle kann dabei ein- oder ausgeschaltet sein; im ersten Fall ist jedoch zu beachten, daß der Leuchtkasten eine höhere Intensität als die Kopiererlichtquelle aufweist. Der Leuchtkasten kann mit dem Kopierschlitten geschaltet sein, so daß die Lampen beispielsweise nur während des Kopiervorganges eingeschaltet werden. Es können aber auch weitere Steuerschaltungen unabhängig von dem Kopierer vorgesehen sein, die ein gezieltes An- und Abschalten des Leuchtkastens erlauben. Dadurch läßt sich eine Überhitzungseines Innenraums verhindern.

Der Vorteil der Erfindung liegt auf der Hand. Das zur Aufzeichnung der Vorlage notwendige Licht erreicht die Empfangsvorrichtung nach nur einmaligem Passieren der Vorlage, wodurch sich auch dunkle oder kontrastarme transparente Vorlagen problemlos vervielfältigen lassen. Bei solchen Vorlagen kann es sich z.B. um Röntgenaufnahmen, Mikrofilme, Diapositive oder dergleichen handeln.

In einer weiteren Ausgestaltung der Erfindung wird der Leuchtkasten in mindestens einer seitlichen Halterung angeordnet, die mit dem Kopierer verbunden ist. Anstelle einer Halterung kann auch eine Führungsschiene verwendet werden, in der der Leuchtkasten höhenverstellbar aufgenommen ist. Durch die damit mögliche Veränderung des Abstandes zwischen dem Leuchtkasten und der Vorlage läßt sich die Intensität des Durchlichtes verändern. Es ist weiterhin aber auch möglich, den Leuchtkasten in einem festen Abstand zur Vorlage anzuordnen und die Intensität des Durchlichtes z.B. über einen Schiebewiderstand einzustellen, mit dem die Leuchtkraft der Lampen beeinflußt werden.

Um über die gesamte Vorlagenfläche eine möglichst gleichmäßige Durchleuchtung zu erhalten, ist die Lichtaustrittsfläche des Leuchtkastens parallel zur Vorlagenscheibe des Kopierers ausgerichtet ist. Vorzugsweise entspricht die Lichtaustrittsfläche mindestens der Fläche der Vorlagenscheibe.

In einer anderen Ausgestaltung der Erfindung ist der Leuchtkasten nicht an einer Halterung befestigt, sondern wird über Scharniere an einem der oberen Kantenbereiche des Kopierers angelenkt. Zum Kopieren wird der Leuchtkasten über die Vorlagenscheibe des Kopierers geklappt. Ein Vorteil dieser Ausgestaltung besteht darin, daß der klappbare Leuchtkasten im ausgeschalteten Zustand die Funktion einer üblichen Kopiererabdeckung übernimmt. Ein so ausgerüsteter Kopierer kann also ohne Umrüstung sowohl für normale reflektierende Vorlagen als auch für transparente Vorlagen verwendet werden.

Im folgenden soll die Erfindung anhand eines zeichnerisch dargestellten Ausführungsbeispiels näher erläutert werden.

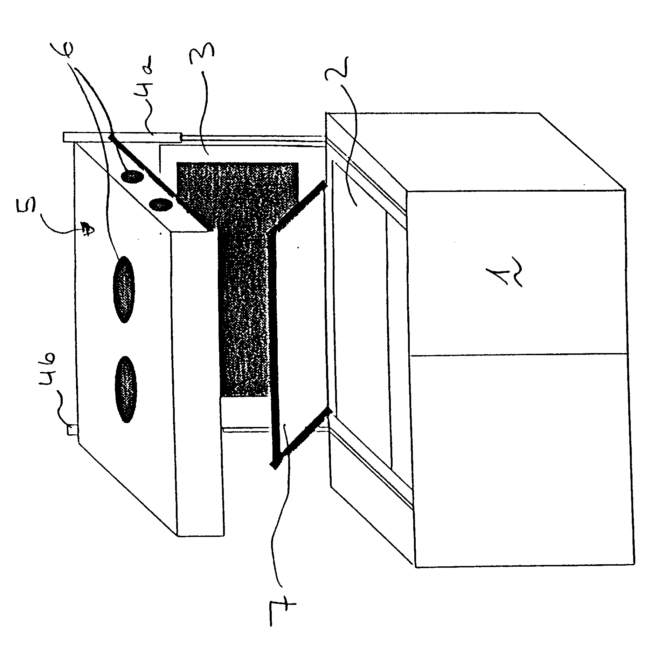

Die einzige Figur zeigt schematisch perspektivisch eine Vorrichtung nach der Erfindung.

Die Abbildung zeigt einen herkömmlichen elektrostatischen Kopierer 1 mit einem Eintrittsfenster 2 und einer Abdeckplatte 3, die hochgeklappt dargestellt ist. Im Bereich der hinteren oberen Kante des Kopierers 1 sind zu beiden Seiten des Eintrittsfensters 2 und senkrecht dazu zwei parallele Führungen 4a, b angebracht. Die Führungen bestehen aus jeweils zwei rohrförmigen, länglichen Teilen mit unterschiedlichem Durchmesser, die teleskopartig ineinandergeschoben werden können. Dadurch läßt sich die Länge der Führungen 4a, b verändern. An ihrem oberen freien Ende tragen die Führungen eine Lichtbox 5, deren Lichtaustrittsfläche parallel zu dem Eintrittsfenster 2 des Kopierers 1 ausgerichtet ist. Die Lichtbox 5 weist auf ihrer oberen Fläche und an den Seiten Lüftungsöffnungen 6 auf. Die Lüftungsöffnungen sollen verhindern, daß sich der Innenraum der Lichtbox 5 zu sehr aufheizt. Die Lichtaustrittsöffnung der Lichtbox 5 ist dem Eintrittsfenster 2 des Kopierers zugewandt und daher auf der Abbildung nicht zu erkennen. In ihr ist (ebenfalls nicht gezeigt) eine Streuscheibe aus z.B. transluzentem Kunststoffmaterial angeordnet. Im Inneren der Lichtbox sind vorzugsweise mehrere längliche beispielsweise parallel zu der seitlichen Kante der Lichtbox ausgerichtete Lichtquellen angeordnet. Das von diesen Lichtquellen ausgehende Licht tritt durch die in der Lichtaustrittsöffnung angeordnete Streuscheibe nach unten aus und beleuchtet das Eintrittsfenster 2. Dabei können die inneren Wände der Lichtbox zur Erhöhung der Lichtintensität verspiegelt sein und eine Art Reflektor bilden. In einem solchen Fall ist es besonders vorteilhaft, wenn vor den verspiegelten Wänden ebenfalls Kunststoffstreuscheiben angeordnet werden. Dadurch wird auch das von dem Reflektor bzw. dem Spiegel ausgehende Licht gestreut. Weiterhin führen die an den Wänden angeordneten Kunststoffscheiben dazu, daß die Wärmeabdämmung der Lichtbox vergrößert wird.

Um eine Vorlage fest auf dem Eintrittsfenster 2 zu halten, ist weiterhin eine Glasplatte 7 vorgesehen, die im Bereich der hinteren Kante an dem Kopierer angelenkt ist. Während des Kopierens kann die Glasplatte 7 auf das Eintrittsfenster und eine darauf befindliche Vorlage geklappt werden und preßt diese fest an. Zum Vorlagenwechsel wird die Glasplatte hochgeklappt. Sie übernimmt die Funktion, die normalerweise die Kopiererabdeckung 3 im normalen Kopiervorgang inne hat.

## Patentansprüche

1. Vorrichtung zur Bildverarbeitung transparenter Vorlagen mit
einem Vorlagenkopiergerät (1) oder einem Vorlagenscanner, die eine Vorlagenscheibe (2), eine interne, eine auf der Vorlagenscheibe angeordnete Vorlage beleuchtende Lichtquelle und eine Empfangsvorrichtung zwecks Aufzeichnung des von der beleuchteten Vorlage kommenden Lichtes auf ein Aufzeichnungsmedium aufweisen,
einem außen am Kopiergerät (1) oder Scanner derart angebrachten, eine weitere Lichtquelle umfassenden Leuchtkasten (6), daß dessen Lichtaustrittsöffnung parallel zur Vorlagenscheibe (2) und zu dieser hin ausgerichtet ist und
einer Streuscheibe aus transluzentem Kunststoff aus den Gruppen der Fluorelastomere oder Fluorkohlenstoffharze, insbesondere PTFE, in der Lichtaustrittsöffnung des Leuchtkastens (6), wobei die Lichtquelle des Leuchtkastens (6) eine höhere Intensität als die interne Lichtquelle im Kopiergerät (1) oder Scanner aufweist oder die interne Lichtquelle während des Beleuchtungsvorgangs durch den Leuchtkasten (6) ausschaltbar ist.

2. Vorrichtung nach Anspruch 1, dadurch gekennzeichnet,daß der Leuchtkasten (5) von einer Halterung (4a, 6) aufgenommen ist, die an dem Kopiergerät (1) angebracht ist.

3. Vorrichtung nach Anspruch 2, dadurch gekennzeichnet,daß die Halterung (4a, 6) aus mindestens einer seitlichen Führungsschiene besteht, deren Länge verstellbar ist, so daß die Höhe des Leuchtkastens (5) verändert werden kann.

4. Vorrichtung nach einem der Ansprüche 1 bis 3, dadurch gekennzeichnet, daß die Lichtaustrittsfläche des Leuchtkastens (5) mindestens der Fläche der Vorlagenscheibe (2) entspricht.

5. Vorrichtung nach einem der Ansprüche 1 bis 4, dadurch gekennzeichnet, daß an dem Kopiergerät (1) eine Glasplatte (7) angelenkt ist, die während des Kopierens über eine auf der Vorlagenscheibe (2) angeordnete Vorlage klappbar ist.

6. Vorrichtung nach Anspruch 1, dadurch gekennzeichnet, daß der Leuchtkasten über Scharniere an einem der oberen Kantenbereiche des Kopiergeräts angelenkt und über die Vorlagenscheibe klappbar ist.

7. Vorrichtung nach einem der Ansprüche 1 bis 6, dadurch gekennzeichnet, daß zwischen dem Leuchtkasten und der Empfangsvorrichtung eine Schaltverbindung vorgesehen ist derart, daß der Leuchtkasten nur während der Bildverarbeitungsdauer der Empfangsvorrichtung Licht abgibt.

## Claims

1. An apparatus for image processing transparent originals, comprising
a copying machine (1) or a copying scanner including a support plate on which an original is placed, an internal light source illuminating an original placed on said plate and a recording means for recording the light received from said original on a recording medium,
a light box (5) including a further light source and being externally mounted to said copying machine (1) or said scanner such that the light outlet opening thereof faces said support plate (2) and extends parallel therewith,
a diffusing plate made of translucent plastic material from the groups of fluor elastomers or fluoro carbon resins, in particular PTFE, provided in said light outlet opening of said light box (5), wherein the light source of the light box has a higher intensity than the internal light source within said copying machine (1) or scanner, or, respectively, wherein said internal light source can be switched off during illumination from said light box (5).

2. The apparatus of claim 1, characterized in that the light box (5) is supported by a holding means (4a, 4b) which is mounted to the copying machine (1).

3. The apparatus of claim 2, characterized in that said holding means (4a,4b) includes at least a lateral guide rail which can be adjusted in length such that the height of the light box (5) can be varied.

4. The apparatus of one of claims 1 to 3, characterized in that the light outlet opening of said light box (5) corresponds to at least the size of said plate (2).

5. The apparatus of one of claims 1 to 4, characterized in that a glass plate (7) is hinged to said copying machine (1) which glass plate can be pivoted over an original placed on said support plate (2) during copying.

6. The apparatus of claim 1, characterized in that the light box is pivoted by hinges to one of the upper edge areas of the copying machine and which light box can be pivoted over the support plate (2).

7. The apparatus of one of claims 1 to 6, characterized in that a switching means is provided between said light box and said receiving means such that the light box transmits light only during the image processing time of said receiving means.

## Revendications

1. Dispositif de traitement d'images pour documents originaux transparents, comportant
un copieur (1) ou un scanner de copie de documents originaux, qui comprennent un plateau porte-original (2), une source interne de lumière éclairant le document original placé sur le plateau porte-original et un dispositif récepteur pour l'enregistrement, sur un support d'enregistrement, de la lumière provenant de l'original éclairé,
une boîte à lumière (6) contenant une autre source lumineuse et disposée l'extérieur du copieur (1) ou scanner de telle faon que son orifice de sortie de la lumière ait une surface parallèle au plateau porte-original (2) et soit orienté vers celui-ci,
un plateau diffuseur on matière plastique translucide, du groupe des fluoélastomères ou des résines fluorocarbonées, en particulier en PTFE, dans l'orifice de sortie de la lumière de la boîte à lumière (6), étant entendu que la source de lumière de la boîte à lumière (6) présente une intensité plus grande que la source de lumière interne placée dans le copieur (1) ou le scanner, ou bien que la source de lumière interne peut être coupée pendant l'opération d'éclairement par la boîte à lumière (6).

2. Dispositif suivant la revendication 1, caractérisé en ce que la boîte à lumière (5) est maintenue par une fixation (4a, 4b) qui est adaptée sur le copieur (1).

3. Dispositif suivant la revendication 2, caractrisé en ce que la fixation (4a, 4b) est constituée d'au moins un rail de guidage latéral de longueur réglable, de telle faon que l'on puisse modifier la hauteur de la boîte à lumière (5).

4. Dispositif suivant l'une quelconque des revendications 1 à 3, caractérisé en ce que la surface de sortie de la lumière de la boîte à lumière (5) correspond au moins à la surface du plateau porte-original (2).

5. Dispositif suivant l'une quelconque des revendications 1 à 4, caractérisé en ce que, sur le copieur (1), s'articule une plaque de verre (7) qui, pendant le copiage, peut être rabattue sur un original placé sur le plateau porte-original (2).

6. Dispositif suivant la revendication 1, caractrisé en ce que la boîte à lumière s'articule par des charnières sur l'une des zones de rive supérieures du copieur et peut être rabattue au-dessus du plateau porte-original.

7. Dispositif suivant l'une quelconque des revendications 1 à 6, caractérisé en ce qu'entre la boîte à lumière et le dispositif récepteur, il est prévu une connexion de couplage de telle faon que la boîte à lumière délivre de la lumière au dispositif de réception seulement pendant la durée du traitement d'image.
